# EUROPEAN PATENT APPLICATION

(11) **EP 4 579 472 A1**
(43) Date of publication of application: **02.07.2025**
(21) Application number: 22960719.7
(22) Date of filing: 28.09.2022
(51) Int. Cl.: G06F 16/11, G06F 40/10

(54) **METHOD, SYSTEM AND COMPUTER PROGRAM FOR VERIFYING FALSE OR MISLEADING INFORMATION**

(71) Applicant: Telefónica Innovación Digital, S.L., 28050 Madrid (ES)
(72) Inventor: YANG, Xiaoyuan, 28013 Madrid (ES); FLORES PAGES, Alberto, 28013 Madrid (ES); STALLING, Lars, 28013 Madrid (ES); GOMEZ UTRILLA, Jose Ramon, 28013 Madrid (ES); RAMAN, Aravindh, 28013 Madrid (ES)
(74) Representative: Carlos Hernando, Borja
(86) International application number: PCT/ES2022/070616
(87) International publication number: WO 2024/069023

(57) **Abstract**

The present invention discloses a method, system and computer program for verifying false or misleading information. The method comprises creating a Non-Fungible Token (NFT) and associating it to one or more information records to be verified; distributing the NFT and the record(s) to computing nodes that implement a decentralised blockchain; establishing, for a set of computing nodes of a first type, a first verdict of whether said record(s) include(s) false or misleading information; establishing, for a set of computing nodes of a second type, a second verdict of whether the record(s) include(s) false or misleading information; and adding the first verdict and the second verdict. If the result of the second verdict coincides with the first verdict, the final verdict is set and published, and if the result of the second verdict is different from the first verdict, one or more computing devices that are external to the decentralised blockchain are notified of a conflict.

## Description

### Technical field

The present invention relates to a method, system and computer programs for verifying false or misleading information. In particular, the present invention uses web3 technology, specifically DAO (Decentralised Autonomous Organizations) technology to organise and encourage a community of experts in the verification process.

### Background of the invention

Currently, there are many technologies and databases for verifying published information. The publication of verifications, however, depends on the interests of fact-checkers themselves or on the interests of the company for which the fact-checkers work. Some examples of services dedicated to the detection of fake or misleading news are, for example, Newtral, Maldita, IFCN or AFP.

There are also solutions based on automatic analysis of linguistic features of text, such as word occurrence frequency [1]. Linguistic features can be combined with other sources of information to complement detection capability using different machine learning mechanisms [2]. Such sources may include users' reactions to text (news) or where the users who are trying to promote the content are from. By using neural networks, these and other types of information can be combined to detect whether a text is true or false.

In automatic detection, other information or signals not related to text can also be included. For example, information such as the domain name, the IP of the server where the text is served or the redirect chain [3] can also be part of the automatic detection [4].

Although different existing proposals have shown that automatic mechanisms can achieve very high rates of detection of fake or misleading news [>90%], there are always news stories that escape existing algorithms. Once the automatic algorithms are deployed, the authors of fake or misleading news adapt the texts to avoid detection. For example, fake or misleading news can be written in a way that respects the normal distribution of words in truthful texts. It is basically a cat and mouse game.

The present invention is complementary to solutions based on automatic algorithms, providing an incentive mechanism where the authors of these algorithms are rewarded for maintaining the efficiency of their developments. Due to the fact that the proposed solution adds a consensus mechanism by default, the system allows several algorithms to work together, improving the efficiency of detecting fake or misleading news.

Similarly, the developers of automatic algorithms can always manipulate the final result, according to their subjective orientation. There is no guarantee of neutrality in any existing solution, whether automatic or manual. The neutrality of existing solutions is based on code of ethics statements that all members of the organisation have to respect. However, there is no efficient and transparent mechanism to verify that the code is followed by all members when verifying content.

Furthermore, many of the well-known solutions, for example, *Maldita,* become a news aggregator where hoaxes are identified, explained and rectified. Identifications, however, remain on the solution's portal and are not propagated to users who are consuming information from the portal from which the hoaxes originated.

In addition to the above, the main core of any DAO is the voting mechanism. Several solutions for secure web3-based voting exist in the literature. Depending on where the voting happens, solutions can be classified as on-chain methods and off-chain methods.

On-chain methods are implemented directly on the blockchain infrastructure and voting is executed directly in Smart-contracts within the blockchain. A DAO or NFT token is also used as the voting power. Anyone with a token or NFT can vote. Due to the fact that all voting actions happen directly in the blockchain, on-chain solutions are considered more secure and decentralised. The disadvantage of on-chain solutions is the high cost for the participants of a vote. Each vote involves a modification in the blockchain where it has an associated "gas". The total cost increases based on the number of participants and the frequency of voting. With the high volatility of the value of digital currencies, the total gas cost can be very high. The alternative is off-chain mechanisms that can save up to 99% of gas costs because the blockchain is only modified once the final result of the votes has been added. In off-chain solutions, participants sign the vote, but do not send (write) it directly in the blockchain. Instead, votes are saved in a decentralised database system such as IPFS. Once the voting period is over, a decentralised oracle adds the result and writes it in the blockchain by means of calling up a Smart-contract function. An example of such a solution is offered by SafeSnap.

Regardless of the type of voting mechanism, there is an inherent problem of "fairness" related to how voting power is distributed among DAO members. In most solutions, voting power is distributed equally to each DAO token. One token is equivalent to one vote. The more tokens a member has, the more voting power it gives them. While voting by token may seem fair, the details raise numerous problems. This type of voting favours the "richest" who dictate the governance of the DAO. Ultimately, the "rich" few (those who control most of the tokens) fully control the fate of the DAO, making it a centralised, non-distributed organisation. A fairer method of voting is to assign one vote per person. However, this method has the problem known as "sybil resistance" where a person creates multiple wallet accounts to fool the system. There is currently no proven mechanism to prevent the creation of fake accounts.

New DAO-based methods and systems for verifying false or misleading information are needed to encourage neutral behaviour by members and to ensure that no one can manipulate the organisation's code of conduct.

### References:

[1]: Myle Ott, Yejin Choi, Claire Cardie, and Jeffrey T. Hancock. Finding disappointing opinion spam by any stretch of the imagination. HLT '11, page 309-319, USA,2011. Association for Computational Linguistics.
[2]: Hamid Karimi, Proteek Roy, Sari Saba-Sadiya, and Jiliang Tang. Multisource multiclass fake news detection. In Proceedings of the 27th international conference on computational linguistics, pages 1546-1557, 2018.
[3]: Zhouhan Chen and Juliana Freire. Discovering and measuring malicious URL redirection campaigns from fake news domains. In 2021 IEEE Security and Privacy Workshops (SPW), pages 1-6, 2021
[4]: Benjamin D Home, William Dron, Sara Khedr, and Sibel Adali. Assessing the news landscape: A multi-module toolkit for evaluating the credibility of news. In Companion Proceedings of The Web Conference 2018, pages 235-238, 2018.

### Disclosure of the invention

To combat post-truth and make the world more humane and immune to polarisation, the present invention provides a solution, based on DAO technology, that allows for fast and efficient detection of fake or misleading news.

To this end, exemplary embodiments of the present invention provide, according to a first aspect, a computer-implemented method for verifying false or misleading information. The method comprises: creating, by a processor, a Non-Fungible Token (NFT) for voting and associating it to one or more information records to be verified; distributing, by a processor, said created Non-Fungible Token and said one or more information records to be verified to a plurality of computing nodes that implement a decentralised blockchain; establishing, for a set of computing nodes of the plurality of computing nodes of a first type, a first verdict of whether said one or more information records to be verified include false or misleading information by means of checking different parameters of the information record(s), providing as a result of said first check a series of metadata per information record; establishing, for a set of computing nodes of the plurality of computing nodes of a second type, a second verdict of whether the information record(s) include(s) false or misleading information by means of checking said series of metadata; wherein each computing node of the first type and the second type has equal voting power in establishing said first verdict and said second verdict, and wherein the first verdict and the second verdict are encoded in the decentralised blockchain in the form of a Smart-contract; and adding, by a processor, the first verdict and the second verdict. If the result of the second verdict confirms the result of the first verdict, a final verdict of whether the information record(s) to be verified include(s) false or misleading information is set and published; and if the result of the second verdict does not confirm the result of the first verdict, one or more computing devices that are external to the decentralised blockchain are notified of a conflict between the first verdict and the second verdict, wherein at least one computing device of said one or more computing devices performs, through a plugin installed in a browser of said computing device, a final certification of the first and second verdicts by adding supplementary information to same.

In some exemplary embodiments, the information record(s) to be verified is/are stored in an information repository. Alternatively, the information record(s) to be verified is/are received through a web page.

In some exemplary embodiments, the plurality of computing nodes implement a "one vote per node" mechanism based on an off-chain mechanism through an oracle provided by at least one network operator (or ISP).

In particular, the aforementioned Smart-contract uses a hash, consisting of a Non-Fungible Token (or NFT) for voting and a unique node identifier, as a unique vote identifier, with each computing node of the plurality of computing nodes in establishing the first or second verdict having a single vote for each hash value, and wherein the Smart-contract checks whether a signature of the network operator is correct and verifies that there is no vote associated with the value of said hash, saving the vote if everything is correct and saving in the decentralised blockchain the fact that the computing node has already cast its vote.

In some embodiments, the supply of the second established verdict is by means of a Non-Fungible Token.

In some embodiments, the information record(s) to be verified comprise(s) a document accompanied by meta-information, wherein said document includes text, images, audio and/or video, and wherein the meta-information comprises various types of information including geographic coordinates, references and/or context of the information.

Particularly, according to the present invention, the computing nodes of the first type are selected taking into consideration said meta-information of the information record(s) to be verified.

In some exemplary embodiments, the information repository is updated with said series of metadata.

In some exemplary embodiments, the information records are stored in the information repository in an ordered manner, wherein the ordering of the information records is performed taking into consideration different characteristics of the information including a potential of the information going viral and/or the importance of the information.

In some exemplary embodiments, checking the different parameters of the information record(s) comprises checking the origin of the information source(s) from which the information record(s) has/have been obtained, checking information against public sources and/or verifying whether a multimedia content of the information record(s) has been modified or is out of context.

Other embodiments of the invention which are disclosed herein also include a system and computer programme products for performing the steps and operations of the method proposed in the first aspect of the invention. More particularly, a computer program product is an embodiment that has a computer-readable medium including computer program instructions coded therein which, when executed in at least one processor of a computer system, cause the processor to perform the operations indicated herein as embodiments of the invention.

It should be noted that the implementation of the identity validation oracle for governance voting of the present invention can be performed in multiple ways. One possibility is to be implemented in the chainlink network in the form of external adapters.

Likewise, the voting process defined in the present invention can be implemented either directly in blockchain (on-chain voting) in the form of Smart- contracts or outside blockchain (off-chain voting) where an oracle collects the votes of the members (i.e. the computing nodes), adds them and writes it in blockchain.

Compared to traditional systems, the present invention proposes a decentralised solution to organise the members involved in the validation of information. By having the entire organisational logic written in (Smart-contract) code, the organisation guarantees transparency and neutrality in validations.

Likewise, particularly, in some exemplary embodiments, the present invention implements "one vote per person" by means of an off-chain mechanism through an oracle provided by network operators. Unlike one vote per token, one vote per person ensures the distribution of the organisation's governance. This prevents members with more tokens from being able to control the functioning of the DAO by having more voting power.

Furthermore, by reviewing the information in two steps, the process ensures a quick response and high-quality verifications. The tokens they distribute in each review act as incentives to members to perform quality reviews.

The review request process of the present invention is open to both end-users (reporters) and publishers who want to ensure the quality of their information. Certification of validated content is by means of NFTs that are sent to publishers automatically by the Smart-contract, without human intervention. This ensures transparency and prevents manipulation throughout the process.

The content verified by the present invention belongs to the publishers who are free to embed it within other content such as advertising or related information. The present invention defines a special tag (or TAG) that allows to mark pieces of DAO-verified content.

The consumption of the verifications by the end user is simple by means of installing a plugin in their browser. This plugin ensures the integrity of the verified information.

### Brief description of the drawings

The foregoing and other features and advantages will be more fully understood from the following detailed description, by way of mere illustration and not limitation, of some exemplary embodiments with reference to the attached drawings, wherein:
Figure 1 schematically illustrates an example of a network operator's oracle registration page.
Figure 2 schematically illustrates the flow followed to check one vote per person.
Figure 3 schematically illustrates the flow followed to check that a member has a walletlD.
Figure 4 illustrates an example of how the information records to be reviewed through the plugin are displayed.
Figure 5 schematically illustrates the flow followed to make the request by publishers.

### Detailed description of the invention and exemplary embodiments

The present invention, also referenced as ValiDAO, is organised in the form of a DAO where all organisational logic is dictated by code in the form of a Smart-contract in a decentralised blockchain. The selection of the DAO platform for the final implementation is outside the scope of protection of the present invention. There are many open source solutions on the market today that provide the technological basis for implementing the present invention, for example, DAO Stack, Aragon, Colony, DAOHaus, xDAO, Zodic, Tally, Gnosis Safe, Openzeppelin, Snapshot.

In some exemplary embodiments, the present invention uses an information repository (or information/publication backlog) with different information records to be verified. End-users (also called reporters ) can add interesting information to the backlog for verification. Publishers (external DAO members) can also add entries to the backlog, with an associated cost.

Based on different parameters such as potential of going viral, importance, etc., information records are ordered and distributed to fact-checkers (or computing nodes). Different fact-checkers may have different skills, competencies or tools. A matchmaking process can be used to assign backlog entries to fact-checkers. In particular, the matchmaking process is based on the type of information record to be verified and the skills of the fact-checkers. Verification consists of a two-step process. In each step, different fact-checkers use tools to check the origin of sources, check information against public sources, or verify whether multimedia content (images, videos, etc.) has been modified or is out of context. The result of these verifications is translated into objective metadata which is added to each piece of information.

The set of metadata allows fact-checkers (other DAO members) to offer verdicts on whether information is misleading or false. While the first step is aimed at providing a quick verdict, the second step (separated in time) is designed to double-check the previous verdict.

An exemplary embodiment of the governance voting process of the present invention is described below, where particularly a mechanism is proposed for implementing 'one vote per person' using an off-chain oracle mechanism.
- Governance voting:
   Governance voting determines the fate of a DAO. In the present invention, governance changes start with the creation of a proposal. Anyone with a token of the present invention can create a proposal for a change in functioning. For example, a member may propose not to accept a validation petition from a given publisher. The proposal must be accompanied by a description, such as the reason for which the publisher should not be accepted. Another example would be the set of functions to be called (with their corresponding input parameters) in case of a favourable vote. In this case, the function that allows to accept/deny a publisher would be called. The input parameter would be the information that allows the publisher to be identified, for example, their wallet address.

Once the proposal is created, it is registered in blockchain to make it immutable and public to all members. Next, the proposal to accept votes is activated. Each member has a period of time (e.g. 2 weeks) to cast their vote. Within the voting period, a member may rectify their vote and vote again.

When the voting period ends, the Smart-contract of the present invention counts the voting result, which can be positive or negative. In the case of a positive vote, execution of the proposal is automatically scheduled and executed within blockchain. No one in the DAO can stop the execution of the functions associated to the proposal after a favourable vote. In contrast, the proposal is automatically discarded if the vote is negative.

In order to achieve a fair functioning of the proposed method and system, each DAO member has equal voting power, regardless of the number of tokens they have at their disposal.

The off-chain oracle is implemented by mobile phone operators (ISPs) and allows to ensure that a natural person has only one vote in the voting on a proposal.

For each proposal, the present invention creates a unique NFT for voting and distributes it to the wallets of the DAO members. A member is free to use several wallets and multiple copies of the NFT are delivered to them.

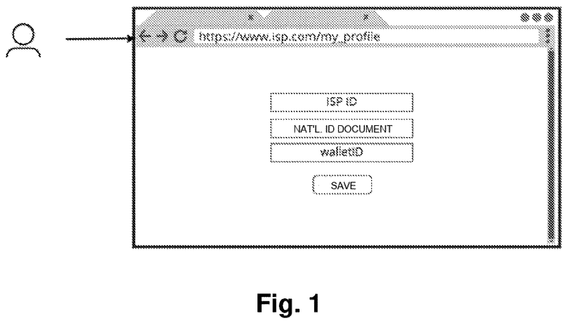

The operators' oracle provides a registration page where each authenticated user can associate a wallet identifier or walletID with their ISP account. Figure 1 shows an example of the page layout, where the user can enter their walletID through a Wallet API (e.g. Metamask). The walletID is saved in the ISP's system together with other information, such as the national document or the unique identifier of the ISP itself.

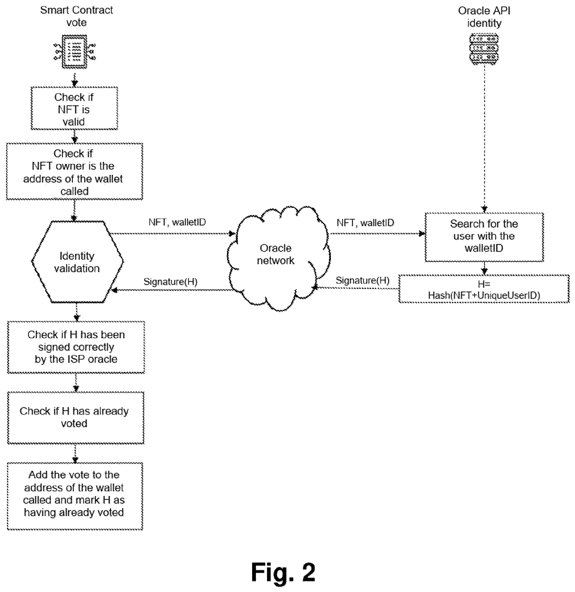

In the voting process, see Figure 2, the Smart-contract calls an oracle API (ISP) with two input parameters: the NFT for voting and its walletlD. The API verifies that walletID matches the value that the user had previously registered. In such case, it returns a token (or verified token) with the following information: the NFT for voting; user walletlD; hash of the content formed by the NFT for voting and the unique user identifier within the ISP system (H); and the ISP signature of the Sign(H) content.

The Smart-contract of the present invention uses hash H as the unique vote identifier. There can only be one vote for each value of H. Once the oracle network returns Sign(H), the Smart-contract looks to see if the ISP signature is correct and verifies that there is no vote associated with the value of H. If everything is correct, it saves the walletID vote. Furthermore, it saves in blockchain the fact that H has already cast their vote. With this process, if the ISP ensures that a natural person can only create a single user in its system, the present invention can implement one vote per person.

Due to country regulation, ISPs are obliged to identify users physically when they purchase a contract with them. Typically, this includes asking for citizenship documentation from each country (e.g. passport or National ID Document). This allows ISPs to build a unique identity. Even if a user has several mobile lines, there is only one user in the ISP system.

Although the user can modify the walletlD during the voting period, one vote per person is ensured since the verified token is associated to the ISP identity and not the walletID of the user. Furthermore, members can keep their identity anonymous, since the ISP user identifier is never propagated to the present invention.

The unique user identifier (UniqueUserID) consists of a unique number that is assigned to each client within the ISP database. There are no two users with the same identifier. This identifier is not shared between multiple ISPs. If a user has two contracts with two different operators, they can have two different identifiers. In the final implementation of ValiDAO, this identifier can be used to implement "one vote per person", but all its members would need to be obliged to have a contract with a single operator. In addition, the Smart-contract for voting always points to the oracle of a single operator for identity verification. If a user is not a client of the ISP (selected by ValiDAO), they cannot become a ValiDAO member.

Another implementation contemplated by the present invention is to use the country's citizenship document (e.g. National ID Document) as the UniqueUserlD. In this case, any entity requesting the citizenship document can participate in the oracle network for verifying user identity. For example, entities such as a bank or an energy supplier that have the obligation to validate the user's identity can be part of an oracle network. In this case, the verification process changes slightly to ensure that a user is not using different walletlDs in different entities with the same document.

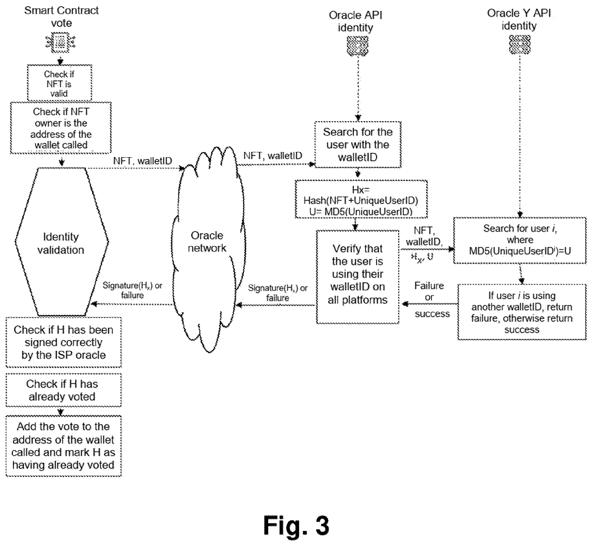

The oracle network first randomly selects an oracle, X, to perform the first petition to search for the user with the walletlD. Oracle X calculates the value of Hx and U and asks all other existing oracles (in Figure 3 only one oracle Y has been depicted) to verify that the user with UniqueUserID is using the same walletlD. The value U is the MD5 hash of the UniqueUserlD and is used to identify the user without revealing the UniqueUserID value. Oracle Y uses U to search its database for user i where MD5(UniqueUserID) is equal to U. If it finds such a user i, then it ensures that the user is using the same walletlD. Otherwise, it returns failed and oracle X propagates it to the Smart-contract to indicate that the user identity verification process has failed.

It is possible that oracle X does not have any users with a walletlD. In such a case, oracle X asks all the oracles if they have a user with a walletID in its database. If it finds the user, it delegates the verification process to another oracle.

There are countries where several documents can be used as personal identification, such as a passport and National ID Document. In these cases, all oracles operating in the same country have to agree to use only one type of document.

There are people who have documents from multiple countries and therefore can be registered in different oracles with different documents and walletIDs. There is no easy solution to tolerate these cases, except to combine other types of oracles that identify the physical location of the user at the time of voting.
- Information verification vote:
   Members not only vote on governance of the DAO, they also vote on information authenticity verification. The main problem that the present invention aims to solve regarding the information authenticity vote is the incentive for members to make the right verdicts.

In particular, each piece of information for verification is in the form of a document accompanied by meta-information. The document can contain either text, image, audio or video, while the meta-information is intended to facilitate verification and contains a wide range of information, such as geographical coordinates, original publication information, references, context, etc.

Verification is also a two-step process. The output of each step is a verdict on the authenticity of the information. While the first step is designed to deliver a quick verdict, the second step is to revalidate the verdict from step one.

Given a piece of information with its meta-information, in one exemplary embodiment, the verification process in each step consists of the following operations:
1. Assignment of information to a set of members. Meta-information is used for selecting members. Each member declares in their profile the list of content types they wish to verify. For example, some members may claim to be specialists in verifying images, while others may be interested in only verifying sports-related content. The present invention selects a list of candidate members and sends them the information verification NFT.
2. Acceptance by the members to perform the verification. Members can accept or reject the assignment. In particular, the present invention always ensures that there is a minimum of N members for verifying a document. If not enough members are available for verification, operation 1 is repeated to select more candidate members.
3. The verification period. During this period, members send their verification. Each verdict must be accompanied by relevant information. For example, if a photograph has been used out of context, the member must indicate where and when it was originally taken. Members verify independently. The information accompanying the verification is not published until the end of the verification period to avoid a contagion effect between members when performing a verification. The members participating in the second validation step have all the information gathered from step 1 to perform re-evaluation.
4. Adding and publishing the verdict. Verdicts of the members are added to build the final verification in the form of *"X% of ValiDAO members think that the document is truthful".*

If the added voting result from the two verification steps is deferred, end-users are notified of a possible conflict in the verdict given by the present invention and invited to review all the information gathered by the members to draw their own opinion.

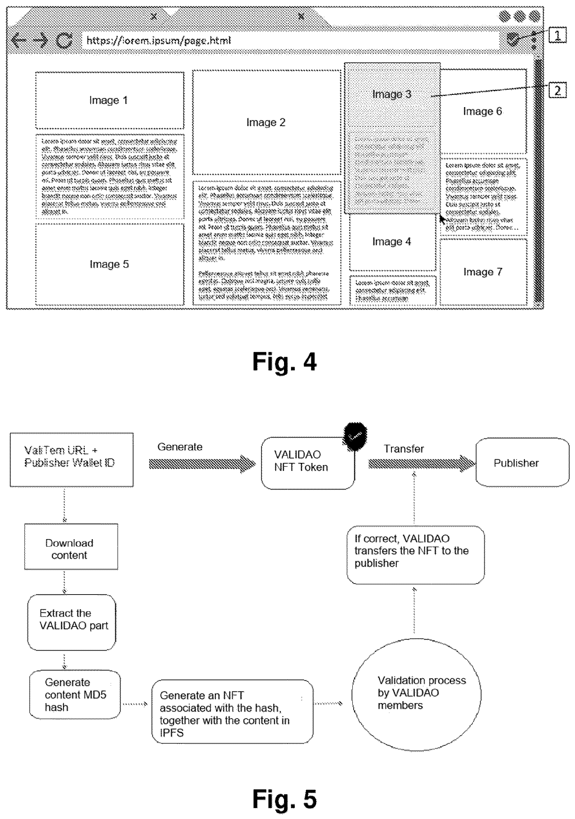

Each information review generates a certain number of tokens that are distributed among all participating members. The function that determines how tokens are distributed is encoded in the Smart-contract and can only be changed through governance votes. The parameters involved in the token distribution function include: the quality of review; the level of accuracy of the member; and the speed of review.
- Request for verification:
   There are two channels through which documents are delivered for review. In one exemplary embodiment, the first channel consists of end-users of the present invention (also called reporters) proposing relevant information to be reviewed. To perform this operation, the present invention provides end-users with a browser plugin (1), see Figure 4, where they can select part of the information on a page (2) that they consider to be misleading. Once the misleading information part is selected, a dialogue box is displayed asking for further information useful for verification. For example, how it is misleading (i.e. images out of context, incorrect information, fabricated facts, hoaxes, etc.); the associated sources (e.g. links to other media); and the correction (description of the correction with links to the information sources contributing to said correction). The plugin takes the information entered by the user and adds more context information (such as the date, the web page, a screenshot of the page, etc.), and sends it to the backlog.

In some exemplary embodiments, the present invention also provides a web page where any publisher can request verification of a piece of information prior to final publication. The publisher performs the following process:
- Publisher generates a URL containing the information to be published. A special tag is attached to the pieces of information to be verified.
- Publisher enters a portal and sends the URL along with their walletlD. The proposed system downloads the content from the URL and extracts the part of the information to be verified.
- A hash of the information is generated along with an NFT where its content is the generated hash. The NFT is published and minted into the blockchain.
- Members verify the authenticity of the information and cast votes.
- When the condition is met (N votes in favour), the Smart-contract transfers the NFT to the walletID of the Publisher. NFT belongs to Publisher from this point onwards.
- Publisher publishes the information along with the link to the NFT.

Figure 5 illustrates how the publisher has marked that part of the content of a web page is validated by the present invention with the special VALIDAO TAG. The TAG is inserted as part of an HTML comment to prevent being shown in browsers. The VALIDAO TAG has two parameters, 1) the NFT generated by the present invention to certify the truthfulness of the content, and 2) the WALLETID which is the publisher's walletlD.

The part verified by the present invention ends with the END_VALIDAO TAG.

To access verifications, the present invention provides a plugin for end-users where they can verify whether information on a web page is validated by the members. The plugin performs the following steps:
1. It extracts the part of the information that is verified, limited by VALIDAO TAG and END_VALIDAO.
2. It generates a hash of the information.
3. It reads the associated NFT content and verifies that NFT is transferred to the publisher.
4. It also verifies that the hash generated in step 2 is equal to the content of the NFT.

The proposed invention can be implemented in hardware, software, firmware or any combination thereof. If it is implemented in software, the functions can be stored in or coded as one or more instructions or code in a computer-readable medium.

As used herein, the computer program products comprising computer-readable media include all forms of computer-readable media, except to the extent that such media is not considered to be non-established transient propagation signals.

The scope of the present invention is defined in the attached claims.

## Claims

1. A method for verifying false or misleading information, which comprises:
creating, by a processor, a Non-Fungible Token (NFT) for voting and associating it to one or more information records to be verified;
distributing, by a processor, said created Non-Fungible Token and said one or more information records to be verified to a plurality of computing nodes that implement a decentralised blockchain;
establishing, for a set of computing nodes of the plurality of computing nodes of a first type, a first verdict of whether said one or more information records to be verified include false or misleading information by means of checking different parameters of the information record(s), providing as a result of said first check a series of metadata per information record;
establishing, for a set of computing nodes of the plurality of computing nodes of a second type, a second verdict of whether the information record(s) include(s) false or misleading information by means of checking said series of metadata;
wherein each computing node of the first type and of the second type has equal voting power in establishing said first verdict and second verdict, and wherein the first verdict and second verdict are encoded in the decentralised blockchain in the form of a Smart-contract; and
adding, by a processor, the first verdict and the second verdict, wherein:
if the result of the second verdict confirms the result of the first verdict, a final verdict of whether the information record(s) to be verified include(s) false or misleading information is set and published; and
if the result of the second verdict does not confirm the result of the first verdict, one or more computing devices that are external to the decentralised blockchain are notified of a conflict between the first verdict and the second verdict, wherein at least one computing device of said one or more computing devices performs, through a plugin installed in a browser of said computing device, a final certification of the first and second verdicts by adding supplementary information to same.

2. The method according to claim 1, wherein the information record(s) to be verified is/are stored in an information repository.

3. The method according to claim 1, wherein the information record(s) to be verified is/are received through a web page.

4. The method according to any one of the preceding claims, wherein the plurality of computing nodes implement a "one vote per node" mechanism based on an off-chain mechanism through an oracle provided by at least one network operator.

5. The method according to claim 4, wherein said Smart-contract uses a hash, consisting of said Non-Fungible Token and a unique node identifier, as a unique vote identifier, with each computing node of the plurality of computing nodes in establishing the first or second verdict having a single vote for each hash value.

6. The method according to claim 5, wherein the Smart-contract further checks whether a signature of the network operator is correct and verifies that there is no vote associated with the value of said hash, saving the vote if everything is correct and saving in the decentralised blockchain the fact that the computing node has already cast its vote.

7. The method according to any one of the preceding claims, wherein the information record(s) to be verified comprise(s) a document accompanied by meta-information, wherein said document includes text, images, audio and/or video, and wherein the meta-information comprises various types of information including geographic coordinates, references and/or context of the information.

8. The method according to claim 7, wherein the computing nodes of the first type are selected taking into consideration said meta-information of the information record(s) to be verified.

9. The method according to claim 2, further comprising updating the information repository by means of adding said series of metadata to each information record.

10. The method according to claim 2, comprising a plurality of information records stored in the information repository in an ordered manner, wherein the ordering of the information records is performed taking into consideration different characteristics of the information including a potential of the information going viral and/or the importance of the information.

11. The method according to any one of the preceding claims, wherein checking the different parameters of the information record(s) comprises checking the origin of the information source(s) from which the information record(s) has/have been obtained, checking information against public sources and/or verifying whether a multimedia content of the information record(s) has been modified or is out of context.

12. The method according to claim 2, which comprises using a pairwise search process to assign entries of the information repository to the set of computing nodes of the first type and the second type.

13. A system for verifying false or misleading information, which comprises:
a plurality of computing nodes that implement a decentralised blockchain;
at least one processor configured to create a Non-Fungible Token for voting and associate it to one or more information records to be verified, and to distribute said created Non-Fungible Token and said one or more information records to be verified to a plurality of computing nodes that implement a decentralised blockchain;
one or more computing devices that are external to the decentralised blockchain;
wherein a set of computing nodes of the plurality of computing nodes of a first type is configured to establish a first verdict of whether said one or more information records to be verified include false or misleading information by means of checking different parameters of the information record(s), providing as a result of said first check a series of metadata per information record;
wherein a set of computing nodes of the plurality of computing nodes of a second type is configured to establish a second verdict of whether the information record(s) include(s) false or misleading information by means of checking said series of metadata;
each computing node of the first type and of the second type has equal voting power in establishing said first verdict and second verdict, and the first verdict and second verdict are encoded in the decentralised blockchain in the form of a Smart-contract; and
wherein the at least one processor is further configured to add the first verdict and the second verdict such that if the result of the second verdict confirms the result of the first verdict, a final verdict of whether the information record(s) to be verified include(s) false or misleading information is set and published; and if the result of the second verdict does not confirm the result of the first verdict, said one or more computing devices are notified of a conflict between the first verdict and the second verdict, wherein at least one of said computing devices is configured to perform, through a plugin installed in a browser of the computing device, a final certification of the first and second verdicts by adding supplementary information to same.

14. The system according to claim 13, comprising an information repository, wherein the information record(s) to be verified is/are stored in said information repository.

15. The system according to claim 13, comprising a web page, wherein the information record(s) to be verified is/are received through said web page.

16. A computer program product including code instructions which, when implemented in a computing system, implement a method according to any one of claims 1 to 12.
